# EUROPEAN PATENT SPECIFICATION

(11) **EP 2 424 313 B1**
(45) Date of publication and mention of the grant of the patent: **13.02.2013**
(21) Application number: 10290454.7
(22) Date of filing: 25.08.2010
(51) Int. Cl.: H04W 52/48, H04W 52/10, H04L 1/00, H04W 52/36, H04L 1/18, H04W 52/24, H04W 52/14, H04W 52/20

(54) **Method for controlling transmission power of a wireless terminal**
Verfahren zur Steuerung der Übertragungsenergie eines drahtlosen Endgeräts
Procédé de contrôle de la puissance de transmission d'un terminal sans fil

(43) Date of publication of application: 29.02.2012
(73) Proprietor: Alcatel Lucent, 75007 Paris (FR)
(72) Inventor: Jugl, Enrico, 90409 Nürnberg (DE); Mückenheim, Jens, 90411 Nürnberg (DE); Luton, Gregoire, 75015 Paris (FR)
(74) Representative: Wetzel, Emmanuelle

(56) References cited:
- EP-A1- 2 063 547
- WO-A1-02/082685
- WO-A1-2009/136829
- US-A1- 2006 133 268

## Description

### Field of the invention

The invention relates to a method for controlling transmission power of a wireless terminal in a cell of a wireless telecommunication network and for controlling a number of data re-transmissions in the wireless telecommunication network.

### Background and related art

In wireless telecommunication networks a base station sends power control commands to a wireless terminal. With these power control commands the transmission power of the wireless terminal is controlled. The transmission power of the wireless terminal has to be high enough for enabling the wireless terminal to transmit signals to the base station. A too high transmission power is not wanted because of possible interferences between different wireless terminals.

Data re-transmission is also known in common wireless telecommunication networks. A common re-transmission scheme is hybrid automatic repeat request (HARQ). According to the HARQ scheme bits are added to data to be transmitted from the wireless terminal to the base station. Additionally forward error correction bits are also added to already existing error detection bits. The forward error correction bits and the error detection bits help the base station to receive data transmitted from the wireless terminal under poor signal conditions. If the channel quality is good enough, all transmission errors should be correctable, and the base station can obtain the correct data block transmitted by the wireless terminal. If the channel quality is bad, and not all transmission errors can be corrected by the base station, the base station will detect this situation using the error detection code. Then the received coded data block is discarded and a re-transmission is requested by the base station. Re-transmissions are requested until the base station has successfully obtained the correct data block. Thus, in poor channel conditions several data re-transmissions are requested, while in perfect channel conditions no re-transmission is requested by the base station.

### Summary of the invention

It is the object of the present invention to provide an improved method for controlling transmission power of a wireless terminal and for controlling a number of data retransmissions in a wireless telecommunication network. This object is achieved by a method according to independent claim 1. Embodiments of the invention are given in the dependent claims.

The invention provides a transmission method between a wireless terminal and a base station in a wireless cellular network. The wireless terminal and the base station are in a communication session whereby the wireless terminal transmits data packets to the base station in acknowledged mode with retransmission of data packets not correctly received. The transmission power of the wireless terminal is controlled by a power control algorithm which dynamically adjusts a signal-to-noise ratio (SNR) reference for the communication session responsive to the comparison of the number of retransmission of a data packet with a retransmission threshold. The method comprises the step of adjusting the retransmission threshold responsive to detection that the transmission power of the wireless terminal meets a predetermined power limitation criterion.

The retransmission threshold is related to a signal-to-noise ratio (SNR) reference. The SNR reference is the reference value of the signal-to-noise ratio of the communication connection between the wireless terminal and the base station. Preferably, the SNR reference is set by an outer loop power control in a radio network controller (RNC). The RNC changes the SNR reference depending on the number of re-transmissions required by the base station when receiving data from the wireless terminal. The SNR reference is increased, if data from the wireless terminal is correctly received at the base station after more than M re-transmissions. M is herein a reference value for the number of re-transmissions. If the actual number of data re-transmissions is lower than M, the SNR reference is decreased. For data re-transmissions preferably the HARQ scheme is used.

In other words, the SNR reference is increased when channel quality is poor and decreased when the signal is expected to cause too much interference with other signals. The SNR reference is changed by the algorithm in the RNC in order to obtain a fixed number of M target retransmissions on average. The control of the SNR reference may also be referred to as an outer loop power control (OLPC).

An inner loop power control (ILPC) is performed in the base station. The target of the inner loop power control is to keep the SNR of the received signal at the SNR reference. When the SNR reference is increased, the inner loop power control has also to increase transmission power of the wireless terminal. When the SNR reference is decreased, the inner loop power control decreases the transmission power of the wireless terminal. When decreasing the transmission power of the wireless terminal more data re-transmissions are needed for correctly receiving the data. On the other hand, when increasing the transmission power of the wireless terminal less data re-transmissions are needed for correctly receiving the data.

Thus, the retransmission threshold is related to the transmission power of the wireless terminal. When the retransmission threshold is increased, the transmission power of the wireless terminal shall be decreased and vice versa. Preferably, the retransmission threshold is increased in a loaded cell in order to decrease the SNR reference. A loaded cell is herein understood as a cell with a cell load above a cell load threshold. The cell load is herein understood as the traffic load of a cell. The more wireless data is exchanged in the cell between wireless terminals and the base station the higher the cell load is. If the retransmission threshold is increased and the SNR reference is decreased, the wireless terminal is allowed to use larger transport block sizes, which increases the aggregated cell throughput. In contrast, in case of an unloaded cell, which is a cell with a cell load below the cell load threshold, the retransmission threshold is decreased. This allows the wireless terminal to achieve its peak throughput. Decreasing the retransmission threshold results in increasing the SNR reference and in increasing the transmission power of the wireless terminal. In this way the cell and the user's throughput are optimized simultaneously.

Although the above mentioned algorithms are performed in unloaded and loaded cells of the wireless telecommunication network, one exception of the above mentioned rules of increasing and decreasing the desired number of data retransmissions is made. If the cell load is below the cell load threshold and if the transmission power of the wireless terminal is above a first transmission power threshold, the retransmission threshold is increased instead of decreasing it. Normally, in a cell load below the cell load threshold the retransmission threshold would be decreased. But in this exception, when the transmission power of the wireless terminal is above the first transmission power threshold, the retransmission threshold is increased. This is advantageous for a scenario, where the wireless terminal is located at the cell edge and the cell load is below the cell load threshold. The fact that the wireless terminal is located at the cell edge is determined by determining that the transmission power of the wireless terminal is above the first transmission power threshold. A wireless terminal at the cell edge has to transmit with a high transmission power. The first transmission power threshold is preferably near the maximum transmission power of the wireless terminal. For example, the first transmission power threshold is between 1 and 2 dB below the maximum wireless transmission power.

The reason for increasing the retransmission threshold in this case is that decreasing the retransmission threshold would result in increasing the transmission power of the wireless terminal. Because the wireless terminal is located at the cell edge and the wireless terminal is already transmitting with a transmission power above the first transmission power threshold, the transmission power of the wireless terminal cannot be increased significantly. It may even be the case that the transmission power of the wireless terminal is the maximum transmission power and hence cannot be further increased. By increasing the retransmission threshold for a wireless terminal at the cell edge of a cell with a cell load below the cell load threshold, the SNR reference is decreased and the transmission power of the wireless terminal is also decreased. This is especially advantageous when the wireless terminal moves from the cell center to the cell edge in a cell with a cell load below the cell load threshold. In this case the wireless terminal has a relatively high SNR reference and a relatively low retransmission threshold. When the wireless terminal moves to the cell edge, the transmission power of the wireless terminal has to be increased in order to keep the SNR reference and the retransmission threshold. At a certain point the wireless terminal would get power limited because it has reached its maximum transmission power. This is avoided by the method according to the invention, because the retransmission threshold is increased in a cell with a cell load below the cell load threshold, when the wireless terminal's transmission power exceeds the first transmission power threshold.

This leads to the fact that the wireless terminal will get a large scheduling grant and will be able to use possible transport blocks as large as possible so that it achieves its peak throughput at cell center. When the wireless terminal is moved to the cell edge, the transmission power of the wireless terminal exceeds the first transmission power threshold and the retransmission threshold is increased, which decreases the SNR reference and increases the transport block size used for the transmission. This has a positive impact on the throughput of the wireless terminal.

According to embodiments of the invention the method comprises further the following steps. A signal-to-noise ratio reference is determined for a connection of the wireless terminal with the base station. Afterwards the transmission power of the wireless terminal is set dependent on the signal-to-noise ratio reference. The retransmission threshold is determined for the connection of the wireless terminal with the base station. An actual number of retransmissions for the connection of the wireless terminal with the base station is determined. The signal-to-noise ratio reference is increased, if the actual number of retransmissions is higher than the retransmission threshold. In contrast, the signal-to-noise ratio reference is decreased, if the actual number of retransmissions is lower than the retransmission threshold. Further, the cell load of the cell is determined. The cell load is indicative of the overall wireless telecommunication traffic in the cell. Afterwards the transmission power of the wireless terminal is determined. If the transmission power of the wireless terminal is above the first transmission power threshold, the retransmission threshold is increased. In contrast, if the cell load is below the cell load threshold and if the transmission power of the wireless terminal is below the first transmission power threshold, the retransmission threshold is decreased. The retransmission threshold is also increased, if the cell load is below the cell load threshold and if the transmission power of the wireless terminal is above the first transmission power threshold. The transmission power of the wireless terminal may for example be determined by measurement reports transmitted from the wireless terminal to the base station.

According to embodiments of the invention the data re-transmission is performed according to a hybrid automatic repeat request scheme (HARQ).

According to embodiments of the invention the size of data transport blocks is increased when the signal to interference ratio is decreased.

According to embodiments of the invention the wireless terminal transmits measurement reports to the base station. The measurement reports are indicative of the transmission power.

According to embodiments of the invention the retransmission threshold is decreased, only if the transmission power of the wireless terminal is below a second transmission power threshold. The second transmission power threshold is lower than the first transmission power threshold. The first and the second transmission power threshold are advantageous when the actual transmission power of the wireless terminal oscillates around the first transmission power threshold. By the hysteresis formed by the first and the second transmission power threshold, switching between increasing and decreasing the retransmission threshold is avoided. The retransmission threshold is decreased, only if the transmission power of the wireless terminal falls below the second transmission power threshold.

According to embodiments of the invention the retransmission threshold is increased, only if the transmission power of the wireless terminal is above the first transmission power threshold for at least a first time period. This is also advantageous for avoiding a fast switching between decreasing and increasing the desired number of data re-transmissions.

According to embodiments of the invention the retransmission threshold is decreased, only if the transmission power of the wireless terminal is below the second transmission power threshold for at least a second time period. This is also advantageous for avoiding switching between increasing and decreasing the retransmission threshold over a short time.

According to embodiments of the invention the wireless terminal transmits scheduling information reports to the base station. The scheduling information reports are indicative of the first and/or the second transmission power threshold.

According to embodiments of the invention a data transmission is established between the wireless terminal and the base station. The wireless terminal is instructed by the base station to perform measurements and to transmit measurement reports to the base station. The base station then determines, if the transmission power of the wireless terminal is above the first transmission power threshold. If so, the data throughput of the wireless connection between the wireless terminal and the base station is determined. Afterwards, the base station determines if the data throughput is below a first data throughput threshold. If not, the retransmission threshold is set to a first value. If the data throughput is below the first data throughput threshold, it is determined if the data throughput is below a second data throughput threshold. The second data throughput threshold is lower than the first data throughput threshold. If so, the retransmission threshold is set to a second value. The second value is higher than the first value. If the data throughput is not lower than the second data throughput, the retransmission threshold is set to a third value. The third value is higher than the first value but lower than the second value. Afterwards, it is determined if the transmission power is above the first transmission power threshold after having set the retransmission threshold. If the transmission power is below the first transmission power threshold after having set the retransmission threshold, the retransmission threshold is reset to the first value.

In another aspect the invention relates to a data transmission control module, in a wireless cellular network, comprising processing means for executing a power control algorithm which dynamically adjusts a signal-to-noise ratio (SNR) reference for a communication session between a wireless terminal and a base station. The processing means may for example be a processor. The wireless terminal transmits data packets to the base station in acknowledged mode. Data packets not correctly received are retransmitted responsive to the comparison of the number of retransmission of a data packet with a retransmission threshold. The processing means are further adapted for adjusting the retransmission threshold with respect to a communication session established between a wireless terminal and a base station. Adjusting the retransmission threshold is performed responsive to a detection that a transmission power of the wireless terminal meets a predetermined power limitation criterion.

According to embodiments of the invention the data transmission control module comprises means for determining a signal-to-noise ratio reference for a connection of the wireless terminal with the base station. The data transmission control module further comprises means for setting the transmission power of the wireless terminal dependent on the signal-to-noise ratio reference. Furthermore, the data transmission control module comprises means for determining a retransmission threshold for the connection of the wireless terminal with the base station. Additionally, the data transmission control module comprises means for determining an actual number of retransmissions for the connection of the wireless terminal with the base station. The data transmission control module further comprises means for adjusting the signal-to-noise ratio reference. The means for adjusting the signal-to-noise ratio reference are adapted for increasing the signal-to-noise ratio reference, if the actual number of retransmissions is higher than the retransmission threshold. The means for adjusting the signal-to-noise ratio reference are further adapted for decreasing the signal-to-noise ratio reference, if the actual number of retransmissions is lower than the retransmission threshold.

Means for determining a cell load of the cell is also comprised by the data transmission control module. The cell load is indicative of the overall wireless telecommunication traffic in the cell. Furthermore, the data transmission control module comprises means for determining if the transmission power of the wireless terminal is above a first transmission power threshold. Another means is adapted for increasing the retransmission threshold, if the cell load is above a cell load threshold. Yet another means is adapted for decreasing the retransmission threshold, if the cell load is below the cell load threshold and if the transmission power of the wireless terminal is below the first transmission power threshold. Further means is adapted for increasing the retransmission threshold, if the cell load is below the cell load threshold and if the transmission power of the wireless terminal is above the first transmission power threshold.

### Brief description of the drawings

In the following preferred embodiments of the invention will be described, by way of example only, and with reference to the drawings in which:
- Figure 1: is a block diagram of a wireless terminal, a base station, and a data transmission control module with an inner loop power control and an outer loop power control;
- Figure 2: is a diagram of the wireless terminal's transmission power, the first transmission power threshold, and the second transmission power threshold;
- Figure 3: is a diagram of the user throughput independency of the path loss, which is indicative of the distance between the base station and the wireless terminal;
- Figure 4: is a flow diagram of an embodiment of the invention; and
- Figure 5: is a diagram of the user throughput independency of the path loss for different transmission time intervals.

### Detailed description

Like numbered elements in these Figs. are either identical elements or perform the same function. Elements which have been discussed previously will not necessarily be discussed in later Figs. if the function is identical.

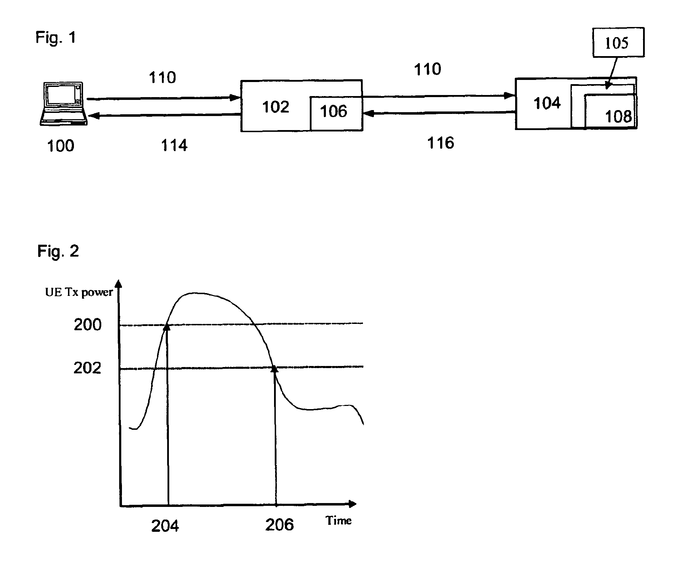

Fig. 1 is a schematic view of a wireless terminal 100, a base station 102, and a radio network controller (RNC) 104. The radio network controller 104 comprises a data transmission control module 105. The data transmission control module 105 comprises a processor 108. The base station 102 and the wireless terminal communicate with each other in a cell of a wireless telecommunication network. Data 110 is transmitted from the wireless terminal to base station 102, which forwards the data to the RNC 104. The processor 108 performs the outer loop power control. This means, that the processor 108 in the data transmission control module 105 determines the signal-to-noise (SNR) reference. The SNR reference setting 116 is transmitted to the base station 102 from the RNC 104. In the base station 102 a processor 106 performs the inner loop power control (ILPC). The inner loop power control determines the transmission power of the wireless terminal 100 based on the SNR reference setting 116 received from RNC 104. Base station 102 transmits the transmission power control command 114 to base station 102. Transmission power control command 114 is indicative of the transmission power to be used by wireless terminal 100 for the telecommunication with base station 102.

Processor 108 in the data transmission control module determines the SNR reference setting based on cell load and transmission power of wireless terminal 100. Optionally, the processor 108 also considers the data throughput of the wireless terminal 100.

When the SNR reference is set higher, this results in a higher transmission power of the wireless terminal 100 and a decreased retransmission threshold. Processor 106 in base station 102 always determines the transmission power to be used by wireless terminal 100 based on the SNR reference setting 116 received from RNC 104. Thus, the SNR reference setting 116 always influences transmission power of wireless terminal 100 and the retransmission threshold. If the retransmission threshold is increased, the SNR reference is decreased and vice versa.

Fig. 2 is a diagram of the wireless terminal's transmission power dependent on time. This is only exemplary for a wireless terminal being located in a cell with a cell load below the cell load threshold moving from the cell center to the cell edge and back in direction to the cell center. The wireless terminal's transmission power is denoted as UE TX power on the Y-axis and the time is denoted on the X-axis. Two thresholds 200 and 204 are transmission power thresholds. The first transmission power threshold 200 is higher than the second transmission power threshold 202. The transmission power of the wireless terminal exceeds the first transmission power threshold 200 at time point 204. Afterwards when the wireless terminal is moved again in direction to the cell center the transmission power of the wireless terminal is decreased so that it falls below the second threshold 202 at time point 206.

The transmission power of the wireless terminal first increases in time so that it exceeds the first transmission power threshold 200 at time point 204. Afterwards, the transmission power reaches a maximum value before the transmission power decreases again so that it falls below the second transmission power threshold 202 at time point 206. The increasing transmission power is related to a movement of the wireless terminal away from the cell center towards the cell edge. The decreasing transmission power of the wireless terminal is related to a movement of the wireless terminal from the cell edge towards the cell center. The wireless terminal transmits its transmission power in measurement reports to base station 102, which forwards the actual transmission power of the wireless terminal to the RNC. The RNC controls the SNR reference independency on the transmission power of the wireless terminal. In case of a cell with a cell load below the cell load threshold the SNR reference is decreased in order to increase the retransmission threshold when the transmission power of the wireless terminal exceeds the first transmission power threshold 200 at time point 204. Thus, the retransmission threshold is increased at time point 204 and decreased at time point 206, when the transmission power of the wireless terminal falls below the second transmission power threshold 202 because of the movement of the wireless terminal towards the cell center. The first transmission power threshold 200 may for example be set about 1.5 dB below the maximum transmission power of the wireless terminal. This is only an exemplary value. Preferably, the first transmission power threshold 200 is set to a value between 1 and 2 dB below the maximum transmission power of the wireless terminal. The second transmission power threshold 202 is advantageous for avoiding fast fluctuations in the retransmission threshold and the SNR reference setting. Each increasing and decreasing of the retransmission threshold and the SNR reference may be combined with a time to trigger. A time to trigger is a time, where the power must be larger than the first transmission power threshold 200 for the time specified by the time to trigger. This can also be used to eliminate the impact from fast fluctuations in transmission power of the wireless terminal.

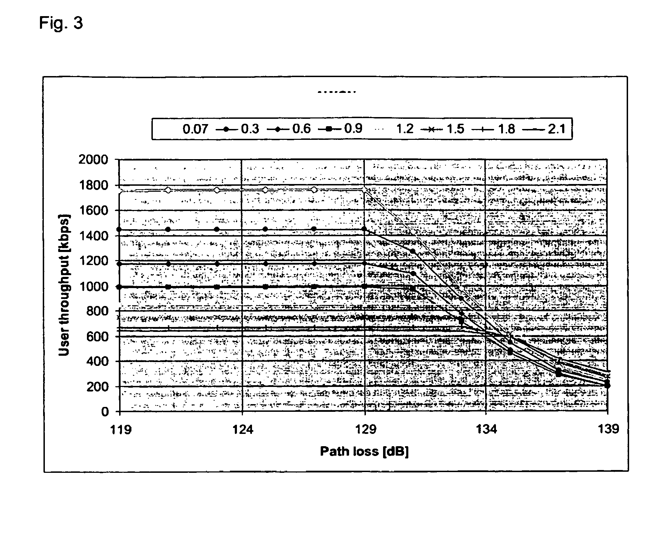

Fig. 3 is a diagram of the user throughput independency of the path loss. The user throughput is equivalent to the throughput of the user's wireless terminal. The path loss is an indicator of the distance between the base station and the wireless terminal. The higher the path loss is, the bigger the distance between the wireless terminal and the base station. In Fig. 3 eight different curves are shown for different desired numbers of data re-transmissions. A first curve for example has a retransmission threshold of 7%. This means that in 7% of transmissions one retransmissions is requested on average. A second curve denoted as 0.3 is the curve for 30% as the retransmission threshold. Further curves represent the user throughput independency of the path loss for 60%, 90%, 120%, 150%, 180% and 210% as the retransmission threshold. For every curve the user throughput decreases from a path loss of 131 dB on. Below a path loss of 131 dB the user throughput does not decrease significantly. The user throughput decreases earlier and faster for the curves with a lower retransmission threshold. From a path loss of 135 dB on the curves with a higher retransmission threshold achieve a higher user throughput than the curves with a lower retransmission threshold. This shows that at the cell edge a higher retransmission threshold is advantageous compared to a lower retransmission threshold. In the center cell a lower retransmission threshold achieves a higher user throughput than a higher retransmission threshold.

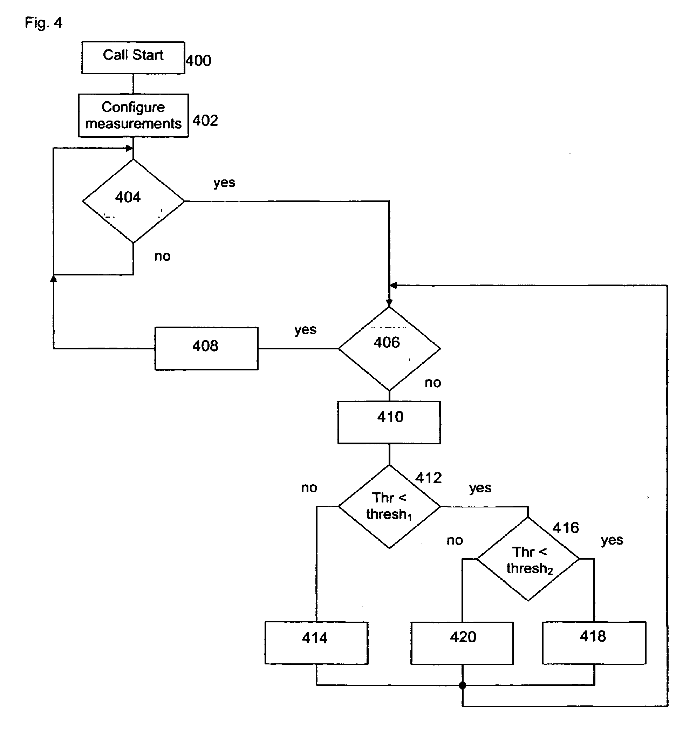

Fig. 4 is a flow diagram of an exemplary call performed by a wireless terminal connected to a base station. The call is started at block 400. In step 302 the base station configures measurements which shall be performed by the wireless terminal. The measurements are for example performed regularly in time. In step 404 the transmission power of the wireless terminal, which is transmitted to the base station in the measurement reports is determined. It is further determined in step 404, if the transmission power the wireless terminal is above the first transmission power threshold. If the transmission power is not above the first transmission power threshold step 404 is performed again. If the transmission power of the wireless terminal is above the first transmission power threshold step 406 is performed. Step 406 comprises determining, if the transmission power of the wireless terminal is below the second transmission power threshold. Step 406 is performed for avoiding fast fluctuations in changing the retransmission threshold. If the transmission power of the wireless terminal is below the second transmission power threshold the retransmission threshold is set to a first value in step 408. The first value is preferably the retransmission threshold being set before performing step 404 for the first time. After performing step 408 step 404 is performed again.

If the transmission power of the wireless terminal is not below the second transmission power threshold step 410 is performed. In step 410 the user throughput of the wireless terminal is determined. Afterwards, in step 412 the determined user throughput of the wireless terminal is compared to a first throughput threshold. If the throughput is not below the first throughput threshold the retransmission threshold is set in step 414 to the retransmission threshold before performing step 404 for the first time. Thus, step 414 is comparable to step 408. This is advantageous because a wireless terminal with a data throughput above the first data throughput threshold does not need to have a different retransmission threshold than the retransmission threshold being valid before performing step 404 for the first time. In other words, when step 414 is performed after performing step 412 for the first time nothing is changed in the wireless telecommunication system with regard to the situation before step 404.

If the data throughput is below the first throughput threshold step 416 is performed. Step 416 consists of determining if the data throughput is below a second data throughput threshold. If the data throughput is lower than the second data throughput threshold step 418 is performed. Step 418 consists of setting the retransmission threshold to a second value. The second value is higher than the first value of steps 408 and 414. If the data throughput is not below the second data throughput threshold step 420 is performed. 420 consists of setting the retransmission threshold to a third value. The third value is higher than the first value set in steps 408 and 414 but lower than the second value set in step 418.

The first value for the retransmission threshold is set for a wireless terminal with a data throughput higher than the first and the second data throughput thresholds. The second value for the retransmission threshold is set for a wireless terminal with a data throughput value below the first and the second data throughput threshold. The second value is the highest value of the retransmission threshold. Thus, for a wireless terminal with a low data throughput the retransmission threshold is increased, for a wireless terminal with a medium data throughput the retransmission threshold is set to a medium value and for a wireless terminal with a high data throughput the retransmission threshold is set to a comparable low value.

After steps 414, 418 and 420, step 406 is performed again.

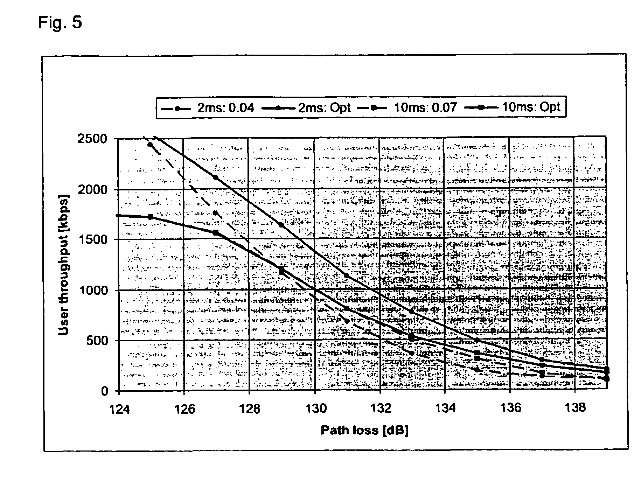

Fig. 5 is a diagram of the user throughput independency of the path loss. The user throughput is equivalent to the data throughput of the wireless terminal and the path loss is indicative of the distance between the base station and the wireless terminal. The higher the path loss is the bigger the distance is between the base station and the wireless terminal. The four curves in the diagram of Fig. 5 represent the throughput independency of the path loss for different transmission time intervals. The chosen time intervals are 2 milliseconds and 10 milliseconds. Dashed curves represent the user throughput of a wireless terminal with an inner loop power control and an outer loop power control according to state of the art algorithms. The solid lines represent the user throughput for wireless terminals being controlled by an inner loop power control and an outer loop power control according to embodiments of the invention. It is clearly visible that the user throughput is in both cases higher for the wireless terminals being controlled by the inner loop power control and the outer loop power control according to embodiments of the invention.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### List of Reference Numerals

| | |
|---|---|
| 100 | Wireless terminal |
| 102 | Base station |
| 104 | RNC |
| 105 | Data transmission control module |
| 106 | Processor |
| 108 | Processor |
| 110 | Data |
| 114 | Power control command |
| 116 | Signal-to-interference reference setting |
| 200 | First transmission power threshold |
| 202 | Second transmission power threshold |
| 204 | Time point |
| 206 | Time point |
| 400 | Call start |
| 402 | Configure measurements |
| 404 | Transmission power above first transmission power threshold? |
| 406 | Transmission power below second transmission power threshold? |
| 408 | Setting retransmission threshold to first value |
| 410 | Determining user throughput |
| 412 | Determining if user throughput is below the first data throughput threshold |
| 414 | Setting retransmission threshold to the first value |
| 416 | Determining if user throughput is below the second data throughput threshold |
| 418 | Setting retransmission threshold to second value |
| 420 | Setting retransmission threshold to third value |

## Claims

1. A data transmission method between a wireless terminal (100) and a base station (102) in a wireless cellular network,
wherein the wireless terminal (100) and the base station (102) are in a communication session whereby the wireless terminal (100) transmits data packets to the base station (102) in acknowledged mode with retransmission of data packets not correctly received; and
wherein the transmission power of the wireless terminal (100) is controlled by a power control algorithm which dynamically adjusts a signal-to-noise ratio (SNR) reference for the communication session responsive to the comparison of the number of retransmission of a data packet with a retransmission threshold,
the method comprising the step of adjusting the retransmission threshold responsive to detection that the transmission power of the wireless terminal meets a predetermined power limitation criterion and
increasing a desired number of retransmissions, if the cell load is below a cell load threshold and if the transmission power of the wireless terminal (100) is above a first transmission power threshold (200).

2. Method according to claim 1, wherein the retransmission is performed according to a hybrid automatic repeat request scheme.

3. Method according to any one of the preceding claims, wherein the size of data transport blocks is increased when the signal to interference ratio is decreased.

4. Method according to any one of the preceding claims, wherein the wireless terminal (100) transmits measurement reports to the base station (102), the measurement reports being indicative of the transmission power.

5. Method according to any one of the preceding claims, wherein the retransmission threshold is decreased, only if the transmission power of the wireless terminal (100) is below a second transmission power threshold (202), wherein the second transmission power threshold is lower than the first transmission power threshold.

6. Method according to any one of the preceding claims, wherein the retransmission threshold is increased, only if the transmission power of the wireless termina (100)I is above the first transmission power threshold (200) for at least a first time period.

7. Method according to any one of claims 5 or 6, wherein the retransmission threshold is decreased, only if the transmission power of the wireless terminal (100) is below the second transmission power threshold (202) for at least a second time period.

8. Method according to any one of the preceding claims, wherein the wireless terminal (100) transmits scheduling information reports to the base station (102), the scheduling information reports being indicative of the first (200) and/or the second transmission power threshold (202).

9. Method according to any one of the claims 1-8, the method comprising further the following steps:
- instructing (402) the wireless terminal (100) to perform measurements and to transmit measurement reports to the base station (102);
- determining (404) if the transmission power is above the first transmission power threshold (200);
- if so, determining (410) the data throughput of the wireless connection between the wireless terminal (100) and the base station (102);
- determining (412) if the data throughput is below a first data throughput threshold (200);
- if not, setting (414) the retransmission threshold to a first value;
- if the data throughput is below the first data throughput threshold, determining (416) if the data throughput is below a second data throughput threshold, the second data throughput threshold being lower than the first data throughput threshold;
- if so, setting (418) the retransmission threshold to a second value, the second value being higher than the first value;
- if not, setting (420) the retransmission threshold to a third value, the third value being higher than the first value but lower than the second value;
- determining if the transmission power is above the first transmission power threshold (200) after having set the retransmission threshold;
- if the transmission power is below the first transmission power threshold (200) after having set the retransmission threshold, resetting (408) the retransmission threshold to the first value.

10. Method according to any one of the claims 1-9, wherein the method comprises determining a signal to noise ratio reference for a connection of the wireless terminal (100) with the base station (102), the method further comprising;
- setting the transmission power of the wireless terminal (100) dependent on the signal to noise ratio reference;
- determining the retransmission threshold for the connection of the wireless terminal (100) with the base station (102);
- determining an actual number of retransmissions for the connection of the wireless terminal (100) with the base station (102);
- increasing the signal to noise ratio reference, if the actual number of retransmissions is higher than the retransmission threshold;
- decreasing the signal to noise ratio reference, if the actual number of retransmissions is lower than the retransmission threshold;
- determining the cell load of the cell, the cell load being indicative of the overall wireless telecommunication traffic in the cell;
- determining, if the transmission power of the wireless terminal (100) is above the first transmission power threshold (200);
- increasing the retransmission threshold, if the cell load is above the cell load threshold;
- decreasing the retransmission threshold, if the cell load is below the cell load threshold and if the transmission power of the wireless terminal is below the first transmission power threshold; and
- increasing the retransmission threshold, if the cell load is below the cell load threshold and if the transmission power of the wireless terminal (100) is above the first transmission power threshold (200).

11. A data transmission control module (104), in a wireless cellular network, comprising processing means (108) for executing a power control algorithm which dynamically adjusts a signal-to-noise ratio (SNR) reference for a communication session between a wireless terminal (100) and a base station (102) whereby the wireless terminal (100) transmits data packets to the base station (102) in acknowledged mode with retransmission of data packets not correctly received, responsive to the comparison of the number of retransmission of a data packet with a retransmission threshold, wherein said processing means (108) are further adapted for adjusting the retransmission threshold with respect to a communication session established between a wireless terminal (100) and a base station (102), responsive to detection that a transmission power of the wireless terminal (100) meets a predetermined power limitation criterion, and wherein the power control algorithm comprises increasing a desired number of retransmissions, if the cell load is below a cell load threshold and if the transmission power of the wireless terminal (100) is above a first transmission power threshold (200).

12. Data transmission control module according to claim 11, the data transmission control module further comprising:
- means (108) for determining the signal to noise ratio reference for the communication session;
- means for setting the transmission power of the wireless terminal (100) dependent on the signal to noise ratio reference;
- means (108) for determining a retransmission threshold for the communication session;
- means for determining an actual number of retransmissions for the communication session;
- means for determining a cell load of the cell, the cell load being indicative of the overall wireless telecommunication traffic in the cell;
- means for determining, if the transmission power of the wireless terminal (100) is above a first transmission power threshold (200);
- means (108) for increasing the retransmission threshold, if the cell load is above a cell load threshold;
- means (108) for decreasing the retransmission threshold, if the cell load is below the cell load threshold and if the transmission power of the wireless terminal (100) is below the first transmission power threshold (200); and
- means (108) for increasing the retransmission threshold, if the cell load is below the cell load threshold and if the transmission power of the wireless terminal (100) is above the first transmission power threshold (200);
wherein the means for adjusting the signal-to-noise ratio reference are adapted for increasing the signal-to-noise ratio reference, if the actual number of retransmissions is higher than the retransmission threshold, and wherein the means for adjusting the signal-to-noise ratio reference are adapted for decreasing the signal-to-noise ratio reference, if the actual number of retransmissions is lower than the retransmission threshold.

13. A radio network controller (104) comprising a data transmission control module (105) according to any one of the claims 11 or 12.

## Patentansprüche

1. Verfahren zur Übertragung von Daten zwischen einem drahtlosen Endgerät (100) und einer Basisstation (102) in einem zellularen drahtlosen Netzwerk,
wobei sich das drahtlose Endgerät (100) und die Basisstation (102) in einer Kommunikationssitzung befinden, wobei das drahtlose Endgerät (100) Datenpakete mit Empfangsbestätigung an die Basisstation (102) überträgt, wobei nicht korrekt empfangene Datenpakete erneut übertragen werden; und
wobei die Sendeleistung des drahtlosen Endgeräts (100) anhand eines Leistungsregelungsalgorithmus gesteuert wird, welcher eine Signal-Rausch-Verhältnis- bzw. SNR-Referenz für die Kommunikationssitzung in Reaktion auf den Vergleich der Anzahl der Neuübertragungen eines Datenpakets mit einem Neuübertragungsgrenzwert dynamisch anpasst, wobei das Verfahren den Schritt des Anpassens des Neuübertragungsgrenzwerts in Reaktion auf das Erkennen, dass die Sendeleistung des drahtlosen Endgeräts ein vorgegebenes Leistungsbeschränkungskriterium erfüllt, umfasst, und
Erhöhen einer gewünschten Anzahl der Neuübertragungen, wenn die Zellenauslastung der Zelle einen Zellenauslastungsgrenzwert unterschreitet, und wenn die Sendeleistung des drahtlosen Endgeräts (100) einen ersten Sendeleistungsgrenzwert (200) überschreitet.

2. Verfahren nach Anspruch 1, wobei die Neuübertragung gemäß einem Hybridwiederholungsaufforderungsschema erfolgt.

3. Verfahren nach einem beliebigen der vorstehenden Ansprüche, wobei die Größe der Datentransportblöcke erhöht wird, wenn sich das Signal-Rausch-Verhältnis verringert.

4. Verfahren nach einem beliebigen der vorstehenden Ansprüche, wobei das drahtlose Endgerät (100) Messberichte an die Basisstation (102) überträgt, wobei die Messberichte für die Sendeleistung indikativ sind.

5. Verfahren nach einem beliebigen der vorstehenden Ansprüche, wobei der Neuübertragungsgrenzwert nur dann verringert wird, wenn die Sendeleistung des drahtlosen Endgeräts (100) einen zweiten Sendeleistungsgrenzwert (202) unterschreitet, wobei der zweite Sendeleistungsgrenzwert niedriger als der erste Sendeleistungsgrenzwert ist.

6. Verfahren nach einem beliebigen der vorstehenden Ansprüche, wobei der Neuübertragungsgrenzwert nur dann erhöht wird, wenn die Sendeleistung des drahtlosen Endgeräts (100) den ersten Sendeleistungsgrenzwert (200) für mindestens eine erste Zeitspanne überschreitet.

7. Verfahren nach einem beliebigen der Ansprüche 5 oder 6, wobei der Neuübertragungsgrenzwert nur dann gesenkt wird, wenn die Sendeleistung des drahtlosen Endgeräts (100) den zweiten Sendeleistungsgrenzwert (202) für mindestens eine zweite Zeitspanne unterschreitet.

8. Verfahren nach einem beliebigen der vorstehenden Ansprüche, wobei das drahtlose Endgerät (100) Planungsinformationsberichte an die Basisstation (102) überträgt, wobei die Planungsinformationsberichte für den ersten (200) und/oder den zweiten Sendeleistungsgrenzwert (202) indikativ sind.

9. Verfahren nach einem beliebigen der Ansprüche 1-8, wobei das Verfahren weiterhin die folgenden Schritte umfasst:
- Anweisen (402) des drahtlosen Endgeräts (100), Messungen durchzuführen und Messberichte an die Basisstation (102) zu übertragen;
- Ermitteln (404), ob die Sendeleistung den ersten Sendeleistungsgrenzwert (200) überschreitet;
- wenn dies der Fall ist, Bestimmen (410) des Datendurchsatzes der drahtlosen Verbindung zwischen dem drahtlosen Endgerät (100) und der Basisstation (102);
- Ermitteln (412), ob der Datendurchsatz einen ersten Datendurchsatzgrenzwert (200) unterschreitet;
- wenn dies nicht der Fall ist, Einstellen (414) des Neuübertragungsgrenzwerts auf einen ersten Wert;
- wenn der Datendurchsatz den ersten Datendurchsatzgrenzwert unterschreitet, Ermitteln (416), ob der Datendurchsatz einen zweiten Datendurchsatzgrenzwert unterschreitet, wobei der zweite Datendurchsatzgrenzwert niedriger als der erste Datendurchsatzgrenzwert ist;
- wenn dies der Fall ist, Einstellen (418) des Neuübertragungsgrenzwerts auf einen zweiten Wert, wobei der zweite Wert höher als der erste Wert ist;
- wenn dies nicht der Fall ist, Einstellen (420) des Neuübertragungsgrenzwerts auf einen dritten Wert, wobei der dritte Wert höher als der erste Wert, jedoch niedriger als der zweite Wert ist;
- Ermitteln, ob die Sendeleistung den ersten Sendeleistungsgrenzwert (200) überschreitet, nachdem der Neuübertragungsgrenzwert eingestellt wurde;
- wenn die Sendeleistung den ersten Sendeleistungsgrenzwert (200) unterschreitet, nachdem der Neuübertragungsgrenzwert eingestellt wurde, Rücksetzen (408) des Neuübertragungsgrenzwerts auf den ersten Wert.

10. Verfahren nach einem beliebigen der Ansprüche 1-9, wobei das Verfahren das Bestimmen einer Signal-Rausch-Verhältnis-Referenz für eine Verbindung des drahtlosen Endgeräts (100) mit der Basisstation (102) umfasst, wobei das Verfahren weiterhin umfasst:
- Einstellen der Sendeleistung des drahtlosen Endgeräts (100) gemäß der Signal-Rausch-Verhältnis-Referenz;
- Bestimmen des Neuübertragungsgrenzwerts für die Verbindung des drahtlosen Endgeräts (100) mit der Basisstation (102);
- Ermitteln einer aktuellen Anzahl von Neuübertragungen für die Verbindung des drahtlosen Endgeräts (100) mit der Basisstation (102);
- Erhöhen der Signal-Rausch-Verhältnis-Referenz, wenn die aktuelle Anzahl von Neuübertragungen den Neuübertragungsgrenzwert überschreitet;
- Verringern der Signal-Rausch-Verhältnis-Referenz, wenn die aktuelle Anzahl von Neuübertragungen den Neuübertragungsgrenzwert unterschreitet;
- Ermitteln der Zellenauslastung der Zelle, wobei die Zellenauslastung für den gesamten drahtlosen Telekommunikationsverkehr in der Zelle indikativ ist;
- Ermitteln, ob die Sendeleistung des drahtlosen Endgeräts (100) den ersten Sendeleistungsgrenzwert (200) überschreitet;
- Erhöhen des Neuübertragungsgrenzwerts, wenn die Zellenauslastung den Zellenauslastungsgrenzwert überschreitet;
- Verringern des Neuübertragungsgrenzwerts, wenn die Zellenauslastung den Zellenauslastungsgrenzwert unterschreitet und die Sendeleistung des drahtlosen Endgeräts den ersten Sendeleistungsgrenzwert unterschreitet; und
- Erhöhen des Neuübertragungsgrenzwerts, wenn die Zellenauslastung den Zellenauslastungsgrenzwert unterschreitet und die Sendeleistung des drahtlosen Endgeräts (100) den ersten Sendeleistungsgrenzwert (200) überschreitet.

11. Modul (104) zur Steuerung der Datenübertragung in einem zellularen drahtlosen Netzwerk, umfassend Verarbeitungsmittel (108) zum Ausführen eines Leistungsregelungsalgorithmus, welcher eine Signal-Rausch-Verhältnis- bzw. SNR-Referenz für eine Kommunikationssitzung zwischen einem drahtlosen Endgerät (100) und einer Basisstation (102) dynamisch anpasst, wobei das drahtlose Endgerät (100) Datenpakete mit Empfangsbestätigung an die Basisstation (102) überträgt und diese neu überträgt, wenn sie nicht korrekt empfangen werden, in Reaktion auf den Vergleich der Anzahl der Neuübertragungen eines Datenpakets mit einem Neuübertragungsgrenzwert, wobei die besagten Verarbeitungsmittel (108) weiterhin für das Anpassen des Neuübertragungsgrenzwerts in Bezug auf eine zwischen einem drahtlosen Endgerät (100) und einer Basisstation (102) hergestellten Kommunikationssitzung in Reaktion auf das Erkennen, dass eine Sendeleistung des drahtlosen Endgeräts (100) ein vorgegebenes Leistungsbeschränkungskriterium erfüllt, ausgelegt sind, und wobei der Leistungsregelungsalgorithmus das Erhöhen einer gewünschten Anzahl von Neuübertragungen umfasst, wenn die Zellenauslastung einen Zellenauslastungsgrenzwert unterschreitet und die Sendeleistung des drahtlosen Endgeräts (100) einen ersten Sendeleistungsgrenzwert (200) überschreitet.

12. Modul zur Steuerung der Datenübertragung nach Anspruch 11, wobei das Modul zur Steuerung der Datenübertragung weiterhin umfasst:
- Mittel (108) zum Bestimmen der Signal-Rausch-Verhältnis-Referenz für die Kommunikationssitzung;
- Mittel zum Einstellen der Sendeleistung des drahtlosen Endgeräts (100) gemäß der Signal-Rausch-Verhältnis-Referenz;
- Mittel (108) zum Bestimmen eines Neuübertragungsgrenzwerts für die Kommunikationssitzung;
- Mittel zum Ermitteln einer aktuellen Anzahl von Neuübertragungen für die Kommunikationssitzung;
- Mittel zum Ermitteln der Zellenauslastung der Zelle, wobei die Zellenauslastung für den gesamten drahtlosen Telekommunikationsverkehr in der Zelle indikativ ist;
- Mittel zum Ermitteln, of die Sendeleistung des drahtlosen Endgeräts (100) einen ersten Sendeleistungsgrenzwert (200) überschreitet;
- Mittel (108) zum Erhöhen des Neuübertragungsgrenzwerts, wenn die Zellenauslastung einen Zellenauslastungsgrenzwert überschreitet;
- Mittel (108) zum Verringern des Neuübertragungsgrenzwerts, wenn die Zellenauslastung den Zellenauslastungsgrenzwert unterschreitet und die Sendeleistung des drahtlosen Endgeräts (100) den ersten Sendeleistungsgrenzwert (200) unterschreitet; und
- Mittel (108) zum Erhöhen des Neuübertragungsgrenzwerts, wenn die Zellenauslastung den Zellenauslastungsgrenzwert unterschreitet und die Sendeleistung des drahtlosen Endgeräts (100) den ersten Sendeleistungsgrenzwert (200) überschreitet;
wobei die Mittel zum Anpassen der Signal-Rausch-Verhältnis-Referenz dazu ausgelegt sind, die Signal-Rausch-Verhältnis-Referenz zu erhöhen, wenn die aktuelle Anzahl der Neuübertragungen den Neuübertragungsgrenzwert überschreitet, und wobei die Mittel zum Anpassen der Signal-Rausch-Verhältnis-Referenz dazu ausgelegt sind, die Signal-Rausch-Verhältnis-Referenz zu verringern, wenn die aktuelle Anzahl der Neuübertragungen den Neuübertragungsgrenzwert unterschreitet

13. Funknetzwerk-Controller (104) mit einem Modul (105) zur Steuerung der Datenübertragung gemäß einem beliebigen der Ansprüche 11 oder 12.

## Revendications

1. Procédé de transmission de données entre un terminal sans fil (100) et une station de base (102) dans un réseau cellulaire sans fil,
dans lequel le terminal sans fil (100) et la station de base (102) sont en session de communication, le terminal sans fil (100) transmettant des paquets de données à la station de base (102) en mode confirmation avec retransmission des paquets de données non reçus correctement ; et
dans lequel la puissance de transmission du terminal sans fil (100) est contrôlée par un algorithme de commande de puissance qui ajuste dynamiquement une référence de rapport signal/bruit (SNR) pour la session de communication en réponse à la comparaison du nombre de retransmissions d'un paquet de données avec un seuil de retransmission, le procédé comprenant l'étape d'ajustement du seuil de retransmission en réponse à la détection du fait que la puissance de transmission du terminal sans fil atteint un critère prédéterminé de limitation de puissance, et d'augmentation d'un nombre souhaité de retransmissions, si la charge de cellule est inférieure à un seuil de charge de cellule et si la puissance de transmission du terminal sans fil (100) est supérieure à un premier seuil de puissance de transmission (200).

2. Procédé selon la revendication 1, dans lequel la retransmission est réalisée conformément à un schéma de requête de répétition automatique hybride.

3. Procédé selon l'une quelconque des revendications précédentes, dans lequel la taille des blocs de transport de données augmente lorsque le rapport signal/interférence diminue.

4. Procédé selon l'une quelconque des revendications précédentes, dans lequel le terminal sans fil (100) transmet des rapports de mesure à la station de base (102), les rapports de mesure étant indicatifs de la puissance de transmission.

5. Procédé selon l'une quelconque des revendications précédentes, dans lequel le seuil de retransmission diminue seulement si la puissance de transmission du terminal sans fil (100) est inférieure à un second seuil de puissance de transmission (202), dans lequel le second seuil de puissance de transmission est inférieur au premier seuil de puissance de transmission.

6. Procédé selon l'une quelconque des revendications précédentes, dans lequel le seuil de retransmission augmente seulement si la puissance de transmission du terminal sans fil (100) est supérieure au premier seuil de puissance de transmission (200) pendant au moins une première période temporelle.

7. Procédé selon l'une quelconque des revendications 5 ou 6, dans lequel le seuil de retransmission diminue seulement si la puissance de transmission du terminal sans fil (100) est inférieure au second seuil de puissance de transmission (202) pendant au moins une seconde période temporelle.

8. Procédé selon l'une quelconque des revendications précédentes, dans lequel le terminal sans fil (100) transmet des rapports d'information de planification à la station de base (102), les rapports d'information de planification étant indicatifs du premier (200) et/ou du second seuil de puissance de transmission (202).

9. Procédé selon l'une quelconque des revendications 1 à 8, le procédé comprenant en outre les étapes suivantes :
- donner l'instruction (402) au terminal sans fil (100) d'effectuer les mesures et de transmettre les rapports de mesure à la station de base (102) ;
- déterminer (404) si la puissance de transmission est supérieure au premier seuil de puissance de transmission (200) ;
- si c'est le cas, déterminer (410) le débit de données de la connexion sans fil entre le terminal sans fil (100) et la station de base (102) ;
- déterminer (412) si le débit de données est inférieur à un premier seuil de débit de données (200) ;
- si ce n'est pas le cas, définir (414) le seuil de retransmission à une première valeur;
- si le débit de données est inférieur au premier seuil de débit de données, déterminer (416) si le débit de données est inférieur à un second seuil de débit de données, le second seuil de débit de données étant inférieur au premier seuil de débit de données ;
- si c'est le cas, définir (418) le seuil de retransmission à une deuxième valeur, la deuxième valeur étant supérieure à la première valeur ;
- si ce n'est pas le cas, définir (420) le seuil de retransmission à une troisième valeur, la troisième valeur étant supérieure à la première valeur, mais inférieure à la deuxième valeur ;
- déterminer si la puissance de transmission est supérieure au premier seuil de puissance de transmission (200) après avoir défini le seuil de retransmission ;
- si la puissance de transmission est inférieure au premier seuil de puissance de transmission (200) après avoir défini le seuil de retransmission, redéfinir (408) le seuil de retransmission à la première valeur.

10. Procédé selon l'une quelconque des revendications 1 à 9, dans lequel le procédé comprend la détermination d'une référence de rapport signal/bruit pour une connexion du terminal sans fil (100) à la station de base (102), le procédé comprenant en outre :
- définir la puissance de transmission du terminal sans fil (100) en fonction de la référence de rapport signal/bruit ;
- déterminer le seuil de retransmission pour la connexion du terminal sans fil (100) à la station de base (102) ;
- déterminer un nombre effectif de retransmissions pour la connexion du terminal sans fil (100) à la station de base (102) ;
- augmenter la référence de rapport signal/bruit, si le nombre effectif de retransmissions est supérieur au seuil de retransmission ;
- diminuer la référence de rapport signal/bruit, si le nombre effectif de retransmissions est inférieur au seuil de retransmission ;
- déterminer la charge de cellule de la cellule, la charge de cellule étant indicative du trafic général de télécommunication sans fil dans la cellule ;
- déterminer si la puissance de transmission du terminal sans fil (100) est supérieure au premier seuil de puissance de transmission (200) ;
- augmenter le seuil de retransmission si la charge de cellule est supérieure au seuil de charge de cellule ;
- diminuer le seuil de retransmission si la charge de cellule est inférieure au seuil de charge de cellule et si la puissance de transmission du terminal sans fil est inférieure au premier seuil de puissance de transmission ; et
- augmenter le seuil de retransmission si la charge de cellule est inférieure au seuil de charge de cellule et si la puissance de transmission du terminal sans fil (100) est supérieure au premier seuil de puissance de transmission (200) ;

11. Module de contrôle de transmission de données (104) dans un réseau cellulaire sans fil, comprenant des moyens de traitement (108) pour exécuter un algorithme de commande de puissance qui ajuste dynamiquement une référence de rapport signal/bruit (SNR) pour une session de communication entre un terminal sans fil (100) et une station de base (102), le terminal sans fil (100) transmettant des paquets de données à la station de base (102) en mode confirmation avec retransmission des paquets de données non reçus correctement, en réponse à la comparaison du nombre de retransmissions d'un paquet de données à un seuil de retransmission, dans lequel lesdits moyens de traitement (108) sont en outre adaptés pour ajuster le seuil de retransmission en relation avec une session de communication établie entre un terminal sans fil (100) et une station de base (102), en réponse à la détection du fait qu'une puissance de transmission du terminal sans fil (100) atteint un critère prédéterminé de limitation de puissance, et dans lequel l'algorithme de commande de puissance comprend l'augmentation d'un nombre souhaité de retransmissions, si la charge de cellule est inférieure à un seuil de charge de cellule et si la puissance de transmission du terminal sans fil (100) est supérieure à un premier seuil de puissance de transmission (200).

12. Module de contrôle de transmission de données selon la revendication 11, le module de contrôle de transmission de données comprenant en outre :
- moyens (108) pour déterminer la référence de rapport signal/bruit pour la session de communication ;
- moyens pour définir la puissance de transmission du terminal sans fil (100) en fonction de la référence de rapport signal/bruit ;
- moyens (108) pour déterminer un seuil de retransmission pour la session de communication ;
- moyens pour déterminer un nombre effectif de retransmissions pour la session de communication ;
- moyens pour déterminer une charge de cellule de la cellule, la charge de cellule étant indicative du trafic général de télécommunication sans fil dans la cellule ;
- moyens pour déterminer si la puissance de transmission du terminal sans fil (100) est supérieure à un premier seuil de puissance de transmission (200) ;
- moyens (108) pour augmenter le seuil de retransmission si la charge de cellule est supérieure à un seuil de charge de cellule ;
- moyens (108) pour diminuer le seuil de retransmission si la charge de cellule est inférieure au seuil de charge de cellule et si la puissance de transmission du terminal sans fil (100) est inférieure au premier seuil de puissance de transmission (200) ; et
- moyens (108) pour augmenter le seuil de retransmission si la charge de cellule est inférieure au seuil de charge de cellule et si la puissance de transmission du terminal sans fil (100) est supérieure au premier seuil de puissance de transmission (200) ;
dans lequel les moyens pour ajuster la référence de rapport signal/bruit sont adaptés pour augmenter la référence de rapport signal/bruit si le nombre effectif de retransmissions est supérieur au seuil de retransmission, et dans lequel les moyens pour ajuster la référence de rapport signal/bruit sont adaptés pour diminuer la référence de rapport signal/bruit si le nombre effectif de retransmissions est inférieur au seuil de retransmission.

13. Contrôleur de réseau radio (104) comprenant un module de contrôle de transmission de données (105) selon l'une quelconque des revendications 11 ou 12.
